(19) 

Europäisches
Patentamt
European
Patent Office
Office européen
des brevets

(11) **EP 3 704 948 A1**

(12) **EUROPEAN PATENT APPLICATION**
published in accordance with Art. 153(4) EPC

(43) Date of publication:
**09.09.2020 Bulletin 2020/37**

(21) Application number: **18874932.9**

(22) Date of filing: **31.10.2018**

(51) Int Cl.:
**A23J 3/14** *(2006.01)*    **A23J 3/16** *(2006.01)*

(86) International application number:
**PCT/JP2018/040550**

(87) International publication number:
**WO 2019/088182 (09.05.2019 Gazette 2019/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.11.2017 JP 2017211860**

(71) Applicants:
• **Fuji Oil Holdings Inc.**
**Izumisano-shi, Osaka 598-8540 (JP)**

• **Fuji Oil Company, Limited**
**Izumisano-shi**
**Osaka 598-8540 (JP)**

(72) Inventors:
• **TAKEDA Shinsuke**
**Izumisano-shi**
**Osaka 598-8540 (JP)**
• **HATSUTORI Mitsuo**
**Izumisano-shi**
**Osaka 598-8540 (JP)**

(74) Representative: **Boult Wade Tennant LLP**
**Salisbury Square House**
**8 Salisbury Square**
**London EC4Y 8AP (GB)**

(54) **GRANULAR PROTEIN MATERIAL AND METHOD FOR PRODUCING SAME**

(57)    Provided are: a new protein material which differs from a conventional powder protein material and textured protein material and is obtained by an approach different from a conventional approach; and a use thereof. This method for producing a granular protein material is characterized by performing pressurization and heat treatment, in a direct heating manner using water vapor, on a powder vegetable protein material having an NSI of 60 or greater and a protein content of 75 wt% or more in a solid content, and thereby granulating the powder vegetable protein material, while vertically dropping the powder vegetable protein material in a powdery state.

[Fig. 1]

Soybean protein isolate    Test product 3    Test product 4
(100x observation)

Soybean protein isolate    Test product 3    Test product 4
(300x observation)

## Description

Technical Field

The present invention relates to a granular protein material, which may be used as a food material, and a production method thereof.

Background Art

Various forms of a protein material, which is a food material containing protein as a major component, have been developed. For example, powdery soybean protein materials such as isolated soybean protein, concentrated soybean protein, soy milk powder; milk protein materials such as casein and whey protein; egg protein materials such as egg white; and wheat protein materials such as gluten, are available as powdery protein materials, and used as a raw material for manufacturing various processed foods.

In addition, conventionally, a textured protein material has been used as a substitute material for meat or as a confectionery raw material. For example, a textured soybean protein material is generally prepared by introducing a food material containing protein, such as defatted soybean flour and isolated soybean protein, water and, if necessary, other raw materials into a twin-screw extruder and kneading with a screw to form a water-containing dough, pressurizing and heating the dough, extruding the dough under normal pressure from a slit portion called as die under normal pressure to expand the dough, cutting the expanded dough at regular intervals, and then drying (Patent Documents 1 to 3). The textured soybean protein material has been produced in various textures and sizes for the use of a substitute material for meat or a confectionery raw material.

Prior Art Documents

Patent Documents

Patent Document 1: JP 2007-531530 A (SOLAE, LLC)
Patent Document 2: WO 2006/98399 A1 (FUJI OIL COMPANY, LIMITED)
Patent Document 3: WO 2014/156948 A1 (FUJI OIL COMPANY, LIMITED)
Patent Document 4: JP S54-23971 B (General Mills, Inc.)

Summary of Invention

Problems to Be Solved by Invention

A textured protein material generally has a low-density structure due to expansion, by pressurizing and heating, with a twin-screw extruder. And recent years, its use as a substitute material for meat or as a confectionery raw material is expanding. The quality of the textured protein material, such as texture and taste, is improving year by year. However, it is in an area on an extension of the prior art technology as long as it is based on the same production process, even if the quality of the textured protein material, such as texture and taste, is improved.

Therefore, an object of the present invention is to provide a novel protein material, which is different from the conventional powdery protein material and textured protein material, by an approach different from the conventional technology, and a use of the protein material.

Means for Solving Problems

The present inventors have intensively studied for the above-mentioned problem. As a result, they have found that a granular, low-density characteristic protein material is obtained by an approach using an apparatus for powder heat sterilization. The present invention has been completed by the findings.

That is, the present invention encompasses the following inventions:

(1) a process for producing a granular protein material, including subjecting a powdery vegetable protein material, which has 60 or more of NSI and contains 75% by weight or more of protein with respect to a solid component of the powdery vegetable protein material, to a pressurizing and heating treatment with direct heating with a steam while dropping the powdery vegetable protein material vertically in a powder state,

(2) the process for producing a granular protein material of (1), where the powdery vegetable protein material contains 90% by weight or more of protein with respect to a solid component of the powdery vegetable protein material,

(3) the process for producing a granular protein material of (1) or (2), where a pressure in the pressurizing and heating treatment is 0.3 to 0.9 MPa,

(4) the process for producing a granular protein material of any one of (1) to (3), where a heating time in the pressurizing and heating treatment is 0.00001 to 0.5 seconds,

(5) the process for producing a granular protein material of any one of (1) to (4), where a water absorption ratio of the obtained granular protein material is 8 times by weight or more,

(6) the process for producing a granular protein material of any one of (1) to (4), where a water absorption ratio of the obtained granular protein material is 9 times by weight or more,

(7) the process for producing a granular protein material of any one of (1) to (6), where an oil absorption ratio of the obtained granular protein material is 3 times or more,

(8) the process for producing a granular protein material of any one of (1) to (6), where an oil absorption ratio of the obtained granular protein material is 5 times or more,

(9) a use of an apparatus for powder heat sterilization, which directly heats a powder with a steam while dropping the powder vertically, for a production of a granular protein material by subjecting a powdery vegetable protein material, which has 60 or more of NSI and contains 75% by weight or more of protein with respect to a solid component of the powdery vegetable protein material, to a pressurizing and heating treatment,

(10) a granular protein material containing a powdery vegetable protein material and having the following features A to F:

> A. 75% by weight or more of protein content with respect to a solid component of the granular protein material,
> B. an amorphous granular form in which at least 90% by weight of the total granules are on a 42 mesh sieve,
> C. 50 or less of NSI,
> D. 0.2 $g/cm^3$ or less of bulk specific gravity,
> E. 8 times by weight or more of water absorption ratio, and
> F. 3 times or more of oil absorption ratio,

(11) the granular protein material of (10), where a lightness (L value) with the Hunter-Lab color system of the granular protein material is 75 to 100 when color of a pulverized product of the granular protein material is measured by a reflect light with a color difference meter,

(12) the granular protein material of (10) or (11), where a brownness (a value) with the Hunter-Lab color system of the granular protein material is -5 to 1.5 when color of a pulverized product of the granular protein material is measured by a reflect light with a color difference meter,

(13) the granular protein material of any one of (10) to (12), where a yellowness (b value) with the Hunter-Lab color system of the granular protein material is 0 to 18 when color of a pulverized product of the granular protein material is measured by a reflect light with a color difference meter,

(14) the granular protein material of any one of (10) to (13), where the granular protein material in a water-absorbed state has 10 to 100 gf of a maximum load value measured with a rheometer (plunger diameter 8 mm).

Meanwhile, Patent Document 4 discloses a method for texturizing a powdery protein material, including subjecting a powder form raw material which is concentrated soybean or isolated soybean, having a protein content of at least 30% by weight on dry weight basis, to an apparatus for direct heating with a steam. This method includes contacting a steam with a powder introduced into a rotary valve having a specific structure, and then texturizing the powder by moving the powder through a hollow tube in a pressurized state connected horizontally from the rotary valve. However, the textured material obtained by this method has about 2 to 3 times of water absorption ratio, which is different from the granular protein material aimed at by the present invention.

Effect of Invention

The present invention enables to provide a novel granular protein material which is completely different in quality from the conventional textured soybean protein, and is excellent in water absorption property and excellent in oil absorption property.

Brief Description of Drawings

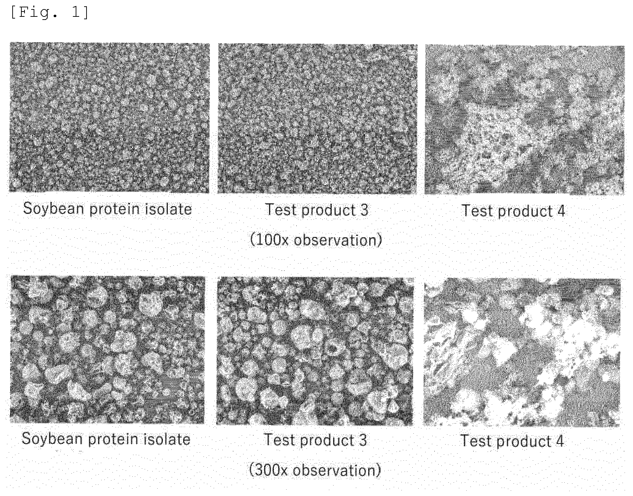

[Fig. 1] Fig. 1 is a photograph substituted for drawing showing the result of observing particles of test products 3 and 4 obtained in Test 1 of Examples and particles of isolated soybean protein as a raw material thereof with a microscope at 100 times and 300 times. In test product 4, it is found that structure is greatly changed from the particles of the raw material isolated soybean protein, and is amorphously coarsen.

Mode for Carrying Out Invention

(Granular protein material)

Hereinafter, characteristics of a granular protein material of the present invention will be specifically described.

o Protein

The granular protein material of the present invention is characterized by containing 50% by weight or more of protein on dry weight basis. The protein content may be, as a lower limit, 55% by weight or more, 60% by weight or more, 65% by weight or more, 70% by weight or more, especially 75% by weight or more, 80% by weight or more, 85% by weight or more, or 90% by weight or more on dry weight basis. In addition, the content may be 99% by weight or less, 95% by weight or less, 90% by weight or less, 85% by weight or less, or 80% by weight or less on dry weight basis.
A protein content is determined by multiplying an amount of nitrogen analyzed with a Kjeldahl method by a nitrogen conversion coefficient of 6.25.

o Form (granular, amorphous, average particle size, color)

The protein material of the present invention is characterized by being granular. As used herein, "granular" means particles having a larger particle size than that of powder form.
A size of granules is not particularly limited, but it is suitable that 90% by weight or more of the total granules remain on 42 mesh sieve compliance with the international standard "ISO 3301-1". However, the granular protein material of the present invention may be appropriately used with pulverized, and in this case, it becomes finer granular or powdery form.
The granular protein material of the present invention is characterized by being, so-called amorphous, granule, which does not have a specific fixed form, probably because the powder particles are aggregated and bound by the heat treatment under pressure of the powder to become coarse particles. Meanwhile, a fixed form granule includes a textured protein material produced by a twin-screw extruder and a granule produced by extruding and granulating. The textured protein material is obtained by subjecting a dough formed by kneading raw materials and water to pressurizing and heating treatment in the apparatus to expand, extruding the dough from a standard die attached on the tip of the apparatus under normal pressure, and then cutting and shaping at regular intervals at the outlet of the apparatus. Thus, the granular protein material of the present invention is distinguished in form from a textured protein material produced with a twin-screw extruder.
The granular protein material of the present invention may also be characterized by having whiter and brighter color than that of a conventional textured protein material. That is, a lightness (L value) with the Hunter-Lab color system of the granular protein material is 75 to 100, more preferably 80 to 95, further preferably 84 to 90 when color of a pulverized product of the granular protein material is measured by a reflect light with a color difference meter. And, a brownness (a value) of the granular protein material is -5 to 1.5, preferably -4 to 0, more preferably -3 to - 0.3, further preferably -2 to -0.7. And, a yellowness (b value) of the granular protein material is 0 to 18, preferably 5 to 17, more preferably 10 to 16, further preferably 12 to 15.6. Any of the above ranges of the L value and the a value may be selected and combined.
The color of "Fujinic PT-FL" (manufactured by Fuji Oil Co., Ltd.), which is one example of a product of textured soybean protein produced by a conventional twin-screw extruder, is 70.3 of L value, 2.4 of a value and 18.8 of b value. This color shows low brightness and strong brownness, and therefore is very different from that of the product of the present invention. In addition, the color of "Fujipro-E" (manufactured by Fuji Oil Co., Ltd.), which is one example of a product of powdery isolated soybean protein, is 83.4 of L value, -0.64 of a value and 15.8 of b value. The granular protein material of the present invention may have same or more brightness and lower brownness as compared with the powdery isolated protein. A sample is pulverized so that the average particle size becomes 60 to 70 μm in the measurement of color.

o Water solubility (low water solubility)

The granular protein material of the present invention has low water solubility. A Nitrogen Solubility Index (NSI) is used as an index of the water solubility. And, lower NSI shows lower water solubility. As an index of low water solubility, the granular protein material of the present invention suitably has 50 or less, preferably 45 or less, 40 or less, preferably 35 or less, more preferably 30 or less of NSI.

In addition, the NSI is shown by a proportion (% by weight) of water-soluble nitrogen (a crude protein) with respect to the total nitrogen content measured by a predetermined method, and herein, the NSI is shown by a value measured according to the following method.

That is, 60 ml of water is added to 3 g of sample, the mixture is stirred with propeller at 37°C for 1 hour, and then the mixture is centrifuged at 1400 × g for 10 minutes to recover the resultant supernatant liquid (I). Then, 100 ml of water is added again to the residual precipitate, the mixture is stirred with propeller again at 37°C for 1 hour, and then centrifuged to recover the resultant supernatant liquid (II). The liquid (I) and the liquid (II) are mixed, and water is added to the liquid mixture to make the volume to 250 ml. The resultant liquid mixture is filtered with filter paper (No. 5), and then nitrogen content in the filtrate is measured by Kjeldahl method. An amount of nitrogen in the sample is measured by Kjeldahl method simultaneously, and then a proportion of the amount of nitrogen recovered as the filtrate (water-soluble nitrogen) with respect to the total nitrogen content in the sample is represented in % by weight, which is referred to as NSI.

o Bulk specific gravity

The granular protein material of the present invention is characterized by having a low bulk specific gravity, specifically 0.2 g/cm$^3$ or less, preferably 0.15 g/cm$^3$ or less, more preferably 0.12 g/cm$^3$ or less, further preferably 0.1 g/cm$^3$ or less, and most preferably less than 0.1 g/cm$^3$ .

o Water absorption ratio

The granular protein material of the present invention is characterized in that the water absorption property is higher than that of conventional textured soybean protein. A water absorption ratio is used as an index of the water absorption property. The water absorption ratio of the granular protein material of the present invention is 7.5 times by weight or more, particularly preferably 8 times by weight or more, and may be 8.5 times by weight or more or 9 times by weight or more. Meanwhile, that of conventional commercially available textured soybean protein is about 3.3 to 7.4 times by weight. The water absorption ratio is measured by the following method.

- Measurement condition for water absorption ratio

To 10 g of sample, 100 g of water at 80°C is added. After absorbing water for 20 minutes, the water is drained with a 30-mesh colander, and the weight (X g) of the sample after the water absorption is measured. Then, the water absorption ratio (Y) is determined by the following equation.

$$Y = (X-10) / 10$$

o Oil absorption ratio

The granular protein material of the present invention is also characterized in that the oil absorption property is higher than that of conventional textured soybean protein. An oil absorption ratio is used as an index of the oil absorption property. The granular protein material of the present invention has 2 times by weight or more, particularly preferably 3 times by weight or more, and may be 4 times by weight or more, 5 times by weight or more or 6 times by weight or more of oil absorption ratio. Meanwhile, that of conventional commercially available textured soybean protein is about 0.8 to 1.7 times by weight, and does not have high oil absorption property. However, the granular protein material of the present invention shows 3 times or more high oil absorption ratio as compared with the conventional textured soybean protein. The oil absorption ratio is measured by the following method.

- Measurement condition for oil absorption ratio

To 10 g of sample, 100 g of palm oil at 80°C is added. After absorbing water for 20 minutes, the water is drained by a 30-mesh colander, and the weight (X g) of the sample after water absorption is measured. Then, the water absorption ratio (Z) is determined by the following equation.

$$Z = (X-10) / 10$$

o Taste

The granular protein material of the present invention may be characterized in that it has little peculiar odor derived from the raw material powdery vegetable protein material. For example, when the raw material is derived from soybean, the odor (soybean odor) peculiar to soybean still remains in the conventional textured soybean protein even after various improvements. However, the granular form soybean protein material obtained by the present invention has reduced or no soybean odor.

For example, when an amount of hexanal contained in the granular form soybean protein material of the present invention and the raw material powdery soybean protein material is measured, the amount of hexanal, which is determined as the peak area measured with GC/MS, in the granular form soybean protein material of the present invention may be reduced to 50% or less, preferably 40% or less, more preferably 35% or less of that in the powdery soybean protein material.

o Texture

When the granular protein material of the present invention is put into the mouth, the tissue may be rapidly disintegrated due to an absorption of saliva, and thereby the granular protein material may provide a texture with a good meltability in the mouth. On the other hand, when the textured soybean protein material prepared by conventional twin-screw extruder is put into the mouth, the tissue is not greatly disintegrated due to an absorption of saliva, and the textured soybean protein material has a chewability with a certain fibrous texture. Thus, there is a great difference in the texture between these two materials.

The texture with good meltability in the mouth may be shown by, as an index, a maximum load value (gf) of a granular protein material after absorbing water measured with a rheometer (viscoelasticity measuring device).

For example, the maximum load value may be measured as follows.

To 10 g of sample of granular protein material, 60 g of water at 25°C is added and the mixture is kept for 20 minutes. Then, 5 g of the sample, which is drained with a 30-mesh colander, is packed into a cylindrical container having a diameter of 25 mm and a height of 40 mm, and a maximum load (gf) of the sample is measured using a rheometer (for example, Model: RE-3305 manufactured by Yamaden Co., Ltd., plunger diameter: 8 mm).

The maximum load value of the granular protein material of the present invention (water-absorbed state) measured by the above-described method is 10 gf or more, preferably 20 gf or more, more preferably 30 gf or more, in the lower limit, and 100 gf or less, preferably 80 gf or less, more preferably 60 gf or less, in the upper limit. On the other hand, the maximum load value of the commercially available textured soybean protein material is not in the range of the low value even in the water-absorbed state, at least 150 gf or more, and may be 300 gf or more or 1000 gf or more depending on the product, and it has a chewability.

(Preparation of granular protein material)

Hereinafter, an aspect of a production of the granular protein material of the present invention will be specifically described.

o Powdery vegetable protein material

As used herein, the "powdery vegetable protein material" is a protein material obtained by removing a part or all of components other than protein, such as, lipid, soluble saccharide, starch, insoluble fiber (okara), and mineral, from a vegetable material as a raw material, and then powderizing the material having concentrated protein content. The protein content of the powdery vegetable protein material is preferably 50% by weight or more, more preferably 60% by weight or more, 70% by weight or more, with respect to a solid component of the powdery vegetable protein material. In addition, especially, the powdery vegetable protein material having 75% by weight or more, 80% by weight or 90% by weight or more of protein content, with respect to a solid component of the powdery vegetable protein material, may be used.

The powdery vegetable protein material may be obtained from various vegetable materials. Examples of the vegetable material include bean such as soybean, pea, mung bean, chickpea, peanut, almond, lupin, pigeon pea, sword bean, Tsurumame (*Glycine soja*), kidney bean, red bean, black-eyed pea, lentil, broad bean, and locust bean; seed such as rapeseed (especially canola varieties), sunflower seed, cottonseed, and coconut; grain such as wheat, barley, rye, rice, and corn, and whole grain and pulverized product thereof. In addition, dregs after industrially extracting oil or starch may be used. In these vegetable materials, major protein normally has an isoelectric point around pH 4.5. In particular, it is preferable to use soybean, pea, mung bean, rapeseed (canola seed), which are commercially produced as isolated vegetable protein, and dregs thereof after the extraction of oil or starch. Typical examples of the powdery vegetable protein material obtained from soybean include isolated soybean protein, concentrated soybean protein, curd powder, defatted soymilk powder, low-fat soymilk powder, and hydrolysate thereof.

The powdery vegetable protein material may be used as not only a single material but also a raw material obtained by mixing a plurality of materials in a desired ratio. In this case, the above-mentioned protein content with respect to a solid component of the powdery vegetable protein material means the value of the mixture. In addition, for example, a powdery vegetable protein material and, if necessary, a powdery animal protein material may be used. More specifically, a powdery soybean protein material and a powdery milk protein material may be mixed at a ratio of 1:10 to 10: 1 and used as a raw material.

Further, a food material other than the powdery vegetable protein material may be appropriately added. The food material is preferably powder. However, the material may be added in a liquid state as long as it does not affect the operation of pressurizing and heating treatment of the powder. Examples of the food material include starch, water-soluble dietary fiber, saccharide, salt, seasoning, acidulant, sweetener, bittering agent, oil, emulsifier, antioxidant, vitamin, micronutrient, and pigment.

Hereinafter, a typical and non-limiting production example of isolated soybean protein will be described, taking soybean as an example. Even if another vegetable raw material is used, an isolated vegetable protein may be produced in accordance with the following production example.

I) Extraction step

A defatted soybean is used as a soybean raw material, and a suspension (slurry) is prepared by adding water thereto and stirring, and thereby protein is extracted with water. The water may have a neutral to alkaline pH and may also include salt such as calcium chloride. The suspension is subjected to a solid-liquid separation means such as centrifugation to separate okara and to obtain a protein extract (so-called soymilk). The protein extract is heat-pasteurized and spray dried at this stage to obtain, so-called defatted soymilk powder, which may be used as a powdery vegetable protein material.

II) Acid precipitation step

Next, protein in the protein extract is insolubilized and acid-precipitated by adding an acid such as hydrochloric acid and citric acid and adjusting pH 4 to 5, which is isoelectric point of soybean protein. Then, an "acid precipitation curd" containing an acid-insoluble component is recovered by removing a supernatant (so-called whey) containing acid-soluble component such as saccharide and ash with a solid-liquid separation means such as centrifugation. The acid precipitation curd is spray dried at this stage to obtain, so-called curd powder, which may be used as a powdery vegetable protein material.

III) Neutralization step

Next, water is added again to the acid precipitation curd, and if necessary, the curd is washed with water to obtain a "curd slurry". Then, the slurry is neutralized by adding an alkali such as sodium hydroxide and potassium hydroxide to obtain a "neutralized slurry".

IV) Pasteurization/pulverization step

Next, the neutralized slurry is pasteurized by heating, spray-dried by, such as spray drier, and if necessary, subjected to fluidized-bed granulation to obtain isolated soybean protein.

However, an isolated soybean protein in the present invention is not limited to those produced in the above production example. As the soybean material, various soybean materials such as whole fat soybean and partially defatted soybean may be used instead of the defatted soybean. Various extraction conditions and devices may be applied to the extraction means. As a method for removing whey from the protein extract, membrane concentration using a membrane such as ultrafiltration membrane may be performed instead of performing acid precipitation. In this case, a neutralization step is not necessarily required. In addition, it may be prepared by a method including removing whey by washing a soybean raw material with acidic water or alcohol, and then extracting a protein with a neutral to alkaline water. Further, in any of the above steps, protein may be partially hydrolyzed by acting protease to the protein solution.

The powdery vegetable protein material used as a raw material of the present invention may be a highly water-soluble vegetable protein material. As an index of high water solubility, NSI (Nitrogen Solubility Index: nitrogen solubility index) is at least 60 or more, 65 or more, 70 or more, 75 or more, 80 or more, 82 or more, 85 or more, 90 or more, 92 or more, 94 or more, or may be 96 or more. The powdery vegetable protein material having relatively high NSI does not disperse well in water, and a lump of the powder, so-called "mamako", floats on the surface of the aqueous solution, making it difficult to dissolve it quickly in water.

o Granulation by pressurizing and heating treatment in powder state

In the present invention, it is characterized in that the above powdery vegetable protein material in a powder state is subjected to a pressurizing and heating treatment by a direct heating method with a steam, not in an aqueous system. The powdery vegetable protein material is granulated in this step, and the granular protein material of the present invention may be produced. In addition, unpleasant odor derived from the powdery vegetable protein material such as soybean odor and fat deterioration odor is reduced in the granular protein material of the present invention through this step, and thus an influence of the taste derived from the taste of the granular protein material on the quality of the processed food may be minimized when the granular protein material of the present invention is used to various processed foods.

A pressure in the pressurizing and heating treatment may be appropriately set so that the granular protein material has a desired quality, but may be preferably 0.3 MPa or more or 0.4 MPa or more, and the heating pressure may be 0.9 MPa or less, 0.8 MPa or less, 0.7 MPa or less, 0.6 MPa or less, 0.5 MPa or less, or 0.4 MPa or less. In another preferred embodiment, a range of 0.3 to 0.7 MPa may be selected.

A temperature in the pressurizing and heating treatment varies depending on the pressure, and may be a temperature in excess of 100°C because of the pressurized state. In some embodiments, the temperature may be 120°C or more, 130°C or more, 140°C or more, 150°C or more, 160°C or more or 170°C or more. The upper limit of the temperature is not limited, but is usually 250°C or lower.

A heating time of the pressurizing and heating treatment may be appropriately set in consideration of the combination with the heating temperature so that the granular protein material has a desired quality, but a shorter time is preferable. For example, it may be 1 minute or less, 30 seconds or less, 20 seconds or less, 10 seconds or less, 5 seconds or less, 2 seconds or less, 1 second or less, particularly may be 0.5 seconds or less or 0.3 seconds or less. The heating time may be 0.00001 second or more, 0001 second or more, or 0.001 second or more. In another preferred embodiment, a range of 0.00001 to 2 seconds, 0.0001 to 1 second, or 0.001 to 0.5 seconds may be selected.

A heating method of pressurizing and heating treatment is roughly classified into a direct heating method and an indirect heating method, and the present invention is characterized in that a direct heating method with a steam is employed. Examples of an apparatus for powder heat treatment capable of performing such pressurizing and heating treatment include an apparatus for air flow powder sterilization, such as "KPU" (OKAWARA MFG. Co., Ltd.), "SKS-50" (SEISHIN ENTERPRISE Co., Ltd.), and "Sonic Stera" (Fujiwara Techno-Art Co., Ltd.) and their improved types. Thus, the powdery vegetable protein material is directly exposed to a steam and heated under pressure by the direct heating method with a steam such as superheated steam, so that the powdery vegetable protein material may be aggregated and granulated.

In addition, in the present invention, it is important that the powdery vegetable protein material is subjected to a pressurizing and heating treatment with direct heating with a steam while dropping the powdery vegetable protein material vertically in a powder state among the pressurizing and heating treatment with direct heating. An apparatus for pressurizing and heating treatment for performing such a heating method preferably has a closed heating space in which the powder introduced into the apparatus may drops vertically, and a mechanism for contacting steam to the powder during the dropping vertically under the pressure. As used herein, such an apparatus for pressurizing and heating treatment is called as a "vertical type". A sterilizer for granular material as disclosed in International Publication WO 2009/145198 may be used as an apparatus for pressurizing and heating treatment. In particular, a commercially available "Sonic Stera" (Fujiwara Techno-Art Co., Ltd.) may be used.

This enables to produce a granular protein material having excellent water absorption property, excellent oil absorption property, and good taste and unique texture.

Meanwhile, there is a so-called "horizontal type" apparatus for pressurizing and heating, in which a closed heating space for pressurizing and hating with a steam is arranged in the horizontal direction. When a highly water-soluble vegetable protein material as a raw material is heated in a powder state using the "horizontal type" apparatus, the powder may adhere to the inside of the apparatus, and the production efficiency becomes inefficient. In addition, although the mechanism is unknown, Patent Document 4 describes that water absorption ratio of the obtained granules is about 2 to 3 times, and thus the water absorption property is insufficient. This may be because a horizontal type apparatus for pressurizing and heating treatment may be difficult to perform pressurizing and heating treatment in an extremely short time as compared with a vertical type apparatus.

In addition, a twin-screw extruder, which has been used in the production of conventional textured protein material, is also used as a powder sterilizer. However, it is for a pressurizing and hating treatment in an indirect heating, and it is not for heating in which steam is directly contacting into powder. Thus, the method using the twin-screw extruder is completely different from the pressurizing and heating treatment of the present invention.

The granular protein material produced as described above may be used as a product as it is, and may be further processed as required, for example, pulverized or crushed to an appropriate particle size. In addition, it may be subjected to a classifier to fractionate into granules of a desired particle size range to obtain a sized granulated protein material.

(Use of granular protein material)

The granular protein material obtained as described above is hard to feel the odor derived from the raw material, and has a good taste, a unique texture, and may be used as a food material excellent in oil absorption property and water absorption property. And, it may be used for various processed foods using these characteristics. For example, the granular protein material of the present invention may be blended with a hamburger and used for preventing drip with the retention effect of gravy. Further, the granular protein material of the present invention may be used as a raw material for other technical field requiring water absorption or oil absorption, such as chemical product, pharmaceutical, cosmetic, civil engineering, and construction, taking advantage of the properties of high water absorption and oil absorption.

Examples

Hereinafter, embodiments of the present invention will be described more specifically by way of Examples. In the Examples, "%" and "part(s)" indicate "% by weight" and "part(s) by weight", unless otherwise specified.

(Test 1)

As described below, a powdery vegetable protein material in a powder state was subjected to a pressurizing and heating treatment by a direct heating method with a steam.

As a sample of the powdery vegetable protein material, a commercially available soybean protein "Fujipro-F" (manufactured by Fuji Oil Co., Ltd.) was used. This sample had a protein content of 91.2% and an NSI of 98.6 as a highly water-soluble type.

A commercially available "Sonic Stera" (Fujiwara Techno-Art Co., Ltd.) was used as an apparatus for the pressurizing and heating. This apparatus is a vertical type apparatus, which can perform a pressurizing and heating treatment by a direct heating with a steam while vertically dropping a powder in a heating space.

Isolated soybean protein was subjected to a powder pressurizing and heating treatment under the heat treatment conditions shown in Table 1, and moisture, NSI, and bulk specific gravity of the obtained treated products were measured and summarized in Table 1 (test products 1 to 4). For quality comparison, various data on the above-mentioned isolated soybean protein and commercially available soybean proteins A to D (manufactured by Fuji Oil Co., Ltd., produced with a twin-screw extruder) were shown.

(Table 1)

| | Powder heating | Heating pressure (MPa) | Heating time (sec) | Form | Moisture (%) | NSI | Bulk specific gravity (g/cm$^3$) |
|---|---|---|---|---|---|---|---|
| Isolated soybean protein | None | - | - | Powdery | 4.9 | 97.8 | 0.30 |
| Test product 1 | Done | 0.05 | 0.2 | Powdery | 4.2 | 94.6 | 0.29 |
| Test product 2 | Done | 0.1 | 0.2 | Powdery | 4.1 | 89.7 | 0.28 |
| Test product 3 | Done | 0.2 | 0.2 | Powdery and Granular | 5.0 | 64.8 | 0.26 |
| Test product 4 | Done | 0.6 | 0.2 | Granular | 6.4 | 20.2 | 0.08 |
| Textured soybean protein A | None | - | - | Flake | 8.0 | - | 0.24 |

(continued)

|  | Powder heating | Heating pressure (MPa) | Heating time (sec) | Form | Moisture (%) | NSI | Bulk specific gravity (g/cm$^3$) |
|---|---|---|---|---|---|---|---|
| Textured soybean protein B | None | - | - | Granular | 7.8 | - | 0.34 |
| Textured soybean protein C | None | - | - | Granular | 4.1 | - | 0.24 |
| Textured soybean protein D | None | - | - | Flake | 7.0 | - | 0.18 |

Test products 1 to 3 had a form of powder or powder and fine granule, 60 or more of NSI, and similar bulk specific gravity to the isolated soybean protein or the textured soybean protein, under their heating treatment conditions. However, under the heating condition of test product 4, a form was changed to "amorphous" granular form, NSI was changed to 40 or less, and bulk specific gravity was changed to small, 0.2 g/cm$^3$ or less. Thus, properties of test product 4 was very different from those of test products 1 to 3.

Meanwhile, the textured soybean protein was formed by cutting at a certain interval at the outlet of the twin-screw extruder, so that the form was a "substantially fixed" granule, and the bulk specific gravity tended to larger than that of test product 4.

(Test 2) Microscopic observation

Test products 3 and 4 and their raw material, isolated soybean protein, were observed with a desktop microscope "Miniscope TM-1000" (manufactured by Hitachi High-Technologies Corporation). Photographs of particles obtained by observing each sample at 100 times and 300 times were shown in Fig. 1. As is clear from the photograph, the isolated soybean protein and test product 3 had almost the same particle form, but in test product 4, the particles were aggregated and amorphously coarsen.

(Test 3) Comparison of water absorption property and oil absorption property

The water absorption property and oil absorption property of test products 3 and 4, isolated soybean protein, and textured soybean proteins A to D, obtained in Test 1, and breadcrumb were examined. The results were shown in Table 2.

(Table 2)

|  | Bulk specific gravity (g/cm$^3$) | Water absorption ratio (times) | Oil absorption ratio (times) |
|---|---|---|---|
| Test product 3 | 0.26 | 7.5 | 2.5 |
| Test product 4 | 0.08 | 9.7 | 6.3 |
| Isolated soybean protein | 0.30 | - | - |
| Textured soybean protein A | 0.24 | 3.9 | 1.2 |
| Textured soybean protein B | 0.34 | 3.3 | 0.8 |
| Textured soybean protein C | 0.24 | 6.4 | 0.9 |
| Textured soybean protein D | 0.18 | 7.4 | 1.7 |

(continued)

|  | Bulk specific gravity (g/cm$^3$) | Water absorption ratio (times) | Oil absorption ratio (times) |
|---|---|---|---|
| Breadcrumb | 0.18 | 5.1 | 3.2 |

Test product 4 had higher water absorption ratio and oil absorption ratio than test product 3. In particular, the oil absorption ratio was higher than 2 times or more. In addition, the properties of test product 4 were changed to those having completely different water absorption property and oil absorption property from the isolated soybean protein, and both the water absorption ratio and the oil absorption ratio of test product 4 were higher than those of the commercially available textured soybean proteins A to D. The textured soybean protein D had relatively high water absorption property and oil absorption property, but test product 4 had higher water absorption property and oil absorption property, and in particular the oil absorption property was 3 times or higher. The water absorption property and oil absorption property of test product 4 were drastically higher than those of breadcrumb.

(Test 4) Comparison of color

The color (Hunter-Lab color system) of test product 4, isolated soybean protein, and textured soybean protein D, obtained in Test 1 was measured with a color difference meter, and lightness (L value), brownness (a value), and yellowness (b value) were measured. Test product 4 and textured soybean protein D were pulverized in advance using a crusher "MICRO POWDER. KGW-G015" (manufactured by Makino MFG Co., Ltd.) so as to have an average particle size of 60 to 70 $\mu$m, and subjected to analysis. The results were shown in Table 3.

(Table 3)

|  | Brightness (L value) | Brownness (a value) | Yellowness (b value) |
|---|---|---|---|
| Test product 4 | 85.6 | -0.79 | 15.4 |
| Isolated soybean protein | 83.4 | -0.64 | 15.8 |
| Textured soybean protein D | 74.8 | 1.9 | 18.6 |

Test product 4 had a very high lightness, a very low brownness, and a low yellowness as compared with textured soybean protein D. In addition, it has the same color, but rather higher lightness, and lower brownness and yellowness as compared with its raw material, isolated soybean protein. And thus, the appearance of test product 4 tended to be whiter and brighter.

(Test 5) Classification test

Test product 4 was classified using a test sieve (compliant with ISO 3310-1 standard), and the particle size distribution was measured. In addition, the water absorption ratio and oil absorption ratio of each classified products were measured. The results were shown in Table 4.

(Table 4)

|  | Weight ratio (%) | Water absorption ratio (times) | Oil absorption ratio (times) |
|---|---|---|---|
| On 5.5 mesh | 30.5 | 8.0 | 3.2 |
| Passing 5.5 mesh/on 10 mesh | 28.3 | 9.2 | 6.0 |
| Passing 10 mesh/on 20 mesh | 20.8 | 11.4 | 9.2 |
| Passing 20 mesh/on 42 mesh | 12.8 | 13.3 | 7.8 |
| Passing 42 mesh | 7.6 | - | - |
| *Sieve aperture: 5.5 mesh: 3.7 mm, 10 mesh: 1.7 mm, 20 mesh: 0.85 mm, 42 mesh: 0.355 mm | | | |

The ratio of the weight of granules on 42 mesh (mesh size 0.355 mm) in the total weight of granules of test product 4 was 92.4%, which was 90% or more. The water absorption ratio was higher as the particles were finer, and the product classified as passing 20 mesh was the highest. Meanwhile, the oil absorption ratio was particularly high for the product classified as passing 10 mesh/on 20 mesh.

(Test 6) Sensory test and odor component analysis

Ten panelists randomly selected in the company were asked to evaluate the taste and texture of test product 4, isolated soybean protein and textured soybean protein D when these samples were put into the mouth. Comments common to many of the panelists were shown in Table 5.

(Table 5)

|  | Taste | Texture |
|---|---|---|
| Test product 4 | - No soybean odor<br>- No taste | - No sticking to the tongue<br>- Soft, good meltability in the mouth |
| Isolated soybean protein | - Soybean odor | - Sticking to the tongue<br>- Bad meltability in the mouth |
| Textured soybean protein D | - Soybean odor | - Hard texture, remaining in the mouth and chewy texture |

Next, gas chromatography mass spectroscopy analysis (GC-MS analysis) was performed according to the analytical conditions in Table 6 to determine the peak area value of hexanal as a representative index of the odor components in test product 4 and isolated soybean protein.
In each sample, 2 g of 5% aqueous dispersion was sampled in a vial, and the vial was set in a GCMS autosampler, and kept at 60°C for 30 minutes. Then, the odor components were adsorbed to the fiber assembly using the solid phase microextraction (SPME) method and subjected to GCMS analysis.
The peak area value of hexanal in each sample was also shown in Table 7.

(Table 6)

GCMS analysis conditions

| Items | Conditions |
|---|---|
| Analysis method | GC×GC-TOFMS<br>Two-dimensional gas chromatography time-of-flight mass spectrometry |
| SPME fiber assembly | "DVB/CAR/PDMS" (manufactured by Sigma-Aldrich (Supelco)) |
| SPME extraction condition | Preheating at 60°C for 30 minutes, adsorption at 60°C for 30 minutes, desorption at 250°C for 1 minute |
| GC (Gas chromatography) |  |
| Apparatus: | "Agilent® 6890" (manufactured by Agilent Technologies) |
| Column used: | "StaBilwax™" (manufactured by Restek Corporation) |
| Column temperature: | 40°C for 2 minutes, 12°C/minute, 240°C for 10 minutes |
| Carrier gas control: | Constant flow, splitless injection |
| Column flow: | 1.0 ml/minute |
| MS (mass spectrometry) |  |
| Apparatus: | "Pegasus 4D™ GC×GC-TOFMS" (manufactured by LECO Corporation) |
| Interface temperature: | 250°C |
| Ion source temperature: | 230°C |
| Data acquisition speed: | 20 spectra/second |
| Ionization voltage: | 70 eV |

(Table 7)

|  | Peak area value | Peak area ratio |
|---|---|---|
| Test product 4 | 28768716 | 35.8 |

(continued)

|  | Peak area value | Peak area ratio |
|---|---|---|
| Isolate soybean protein | 103110508 | 100 |

As described above, test product 4 was preferable having an odor reduced to 40% or less as compared with the isolated soybean protein, an excellent taste, a completely different texture as compared with other samples, and a good meltability in the mouth.

(Test 7) Comparison of meltability in the mouth by rheometer analysis

The maximum load value (gf) of test product 4 and textured soybean proteins A to D, obtained in Test 1, by the rheometer measurement when water was absorbed was examined under the following conditions, and was used as an index of meltability in the mouth. The results were shown in Table 8.

o Conditions of rheometer measurement

Preparation of water-absorbed sample: 60 g of water at 25°C is added to 10 g of sample, and the sample is held for 20 minutes. Then, 5 g of the water-absorbed sample obtained by draining water with a 30-mesh colander is packed in a cylindrical container having a diameter of 25 mm and a height of 40 mm.

- Equipment: Model: RE-3305 manufactured by Yamaden Co., Ltd.

- Plunger diameter: 8mm

(Table 8)

|  | Maximum load (gf) |
|---|---|
| Test product 4 | 43 |
| Textured soybean protein A | 405 |
| Textured soybean protein B | 1615 |
| Textured soybean protein C | 173 |
| Textured soybean protein D | 211 |

As described above, the maximum load value of test product 4 when water was absorbed was 1/4 or less as compared with textured soybean protein materials A to D. From these results, it was also numerically confirmed that, when test product 4 was put into the mouth and made to absorb water with saliva, test product 4 became very soft texture, i.e., test product 4 had very good meltability in the mouth.

(Test 8) Effect of NSI of raw material on granulation

As described below, other powdery vegetable protein materials having NSI different from that of Test 1 were subjected to pressurizing and heating treatment of a direct heating with a steam in a powder state in the same manner as in Test 1.
The treated products from commercially available concentrated soy protein 1 "Wilcon SJ" (manufactured by Wilmar BioEthanol, high NSI type, protein content: 70.3%), and commercially available concentrated soy protein 2 "Wilcon F" (manufactured by Wilmar BioEthanol, low NSI type, protein content: 70.2%), were used as test products 5 and 6, respectively. The heat treatment conditions were the same as those of test product 4 in Test 1 (heating pressure: 0.6 MPa, heating time: 0.2 second).
The moisture, NSI, and bulk specific gravity of the obtained treated products were measured and are summarized in Table 9. For quality comparison, various data on the concentrated soybean protein of this test, the isolated soybean protein of Test 1, and the test product 4 were shown.

(Table 9)

| | Powder heating | Heating pressure (MPa) | Heating time (sec) | Form | Moisture (%) | NSI | Bulk specific gravity (g/cm$^3$) |
|---|---|---|---|---|---|---|---|
| Concentrated soybean protein 1 (high NSI) | None | - | - | Powdery | 3.3 | 57.2 | 0.29 |
| Concentrated soybean protein 2 (low NSI) | None | - | - | Powdery | 5.2 | 6.3 | 0.45 |
| Test product 5 | Done | 0.6 | 0.2 | Powdery | 4.8 | 16.5 | 0.32 |
| Test product 6 | Done | 0.6 | 0.2 | Powdery | 4.6 | 5.6 | 0.43 |
| Isolated soybean protein | None | - | - | Powdery | 4.9 | 97.8 | 0.30 |
| Test product 4 | Done | 0.6 | 0.2 | Granular | 6.4 | 20.2 | 0.08 |

As shown in the results of test products 5 and 6, even when the same powder pressurizing and heating treatment as test product 4 was performed using a low water-soluble powdery vegetable protein material having an NSI of less than 60, the form was still powdery, the bulk specific gravity was not changed, and a granular protein material such as test product 4 was not obtained.

(Test 9)

As described below, the powdery vegetable protein material was subjected to indirect heating pressurizing and heating treatment in a powder state.

As the sample of the powdery vegetable protein material, the same isolated soybean protein as in Test 1 was used. A twin-screw extruder was used as a heating apparatus.

The treatment conditions of the twin-screw extruder were as follows: barrel temperature: inlet 30°C, center 100°C, outlet 150°C, flow rate: 20 kg/hour, screw rotation speed: 200 rpm, and the obtained treated product was dried with hot air in a dry oven. Then, moisture, bulk specific gravity, and color were measured and summarized in Table 10 (test product 7). Various data on the isolated soybean protein and test product 4 were shown for quality comparison.

(Table 10)

| | Powder heating | Means of heating | Form | Moisture (%) | Bulk specific gravity (g/cm$^3$) | Water absorption ratio (times) | Oil absorption ratio (times) | Color (L/a/b) |
|---|---|---|---|---|---|---|---|---|
| Isolated soybean protein | None | | Powdery | 4.9 | 0.30 | - | - | 83.4 -0.64 15.8 |
| Test product 7 | Done | Indirect heating | Granular | 7.0 | 0.16 | 5.7 | 1.5 | 74.8 1.9 18.6 |
| Test product 4 | Done | Direct steam heating | Granular | 6.4 | 0.08 | 9.7 | 6.3 | 85.6 -0.79 15.4 |

As shown in the result of test product 7, when the powder pressurizing and heating treatment of the indirect heating method was performed using a highly water-soluble powdery vegetable protein material, a granular form was obtained. However, it was not an amorphous form as in the above, but a fixed form. The water absorption ratio and the oil absorption ratio of test product 7 were 5.7 times and 1.5 times, and the color was darker lightness, higher brownness and yellowness than those of test product 4. Test product 7 had different form, water absorbing property and oil absorbing property, and color from those of granular protein material of test product 4.

From the above tests, it was shown that novel granular protein material was obtained by subjecting a powdery vegetable protein material having high water-solubility in a powder state to pressurizing and heating treatment with direct heating with a steam to granule the powder. In addition, it was shown that the granular protein material of the present invention had low NSI (low solubility), low bulk density, high water absorption property and oil absorption property, similar or higher brightness and lower brownness and yellowness as compared to the raw material. Further, it was shown that the product of the present invention was excellent in taste with less odor derived from the raw material, powdery vegetable protein material, and that the product of the present invention showed less sticking to tongue as compared with the conventional textured protein material, and was a material having good meltability in the mouth.

**Claims**

1.  A process for producing a granular protein material, comprising subjecting a powdery vegetable protein material, which has 60 or more of NSI and comprises 75% by weight or more of protein with respect to a solid component of the powdery vegetable protein material, to a pressurizing and heating treatment with direct heating with a steam while dropping the powdery vegetable protein material vertically in a powder state.

2.  The process for producing a granular protein material according to claim 1, wherein the powdery vegetable protein material comprises 90% by weight or more of protein with respect to a solid component of the powdery vegetable protein material.

3.  The process for producing a granular protein material according to claim 1 or 2, wherein a pressure in the pressurizing and heating treatment is 0.3 to 0.9 MPa.

4.  The process for producing a granular protein material according to any one of claims 1 to 3, wherein a heating time in the pressurizing and heating treatment is 0.00001 to 0.5 seconds.

5.  The process for producing a granular protein material according to claim 4, wherein a water absorption ratio of the obtained granular protein material is 8 times by weight or more.

6.  The process for producing a granular protein material according to claim 4, wherein a water absorption ratio of the obtained granular protein material is 9 times by weight or more.

7.  The process for producing a granular protein material according to claim 5, wherein an oil absorption ratio of the obtained granular protein material is 3 times or more.

8.  The process for producing a granular protein material according to claim 6, wherein an oil absorption ratio of the obtained granular protein material is 5 times or more.

9.  A use of an apparatus for powder heat sterilization, which directly heats a powder with a steam while dropping the powder vertically, for a production of a granular protein material by subjecting a powdery vegetable protein material, which has 60 or more of NSI and comprises 75% by weight or more of protein with respect to a solid component of the powdery vegetable protein material, to a pressurizing and heating treatment.

10. A granular protein material comprising a powdery vegetable protein material and having the following features A to F:

    A. 75% by weight or more of protein content with respect to a solid component of the granular protein material,
    B. an amorphous granular form in which at least 90% by weight of the total granules are on a 42 mesh sieve,
    C. 50 or less of NSI,
    D. 0.2 g/cm$^3$ or less of bulk specific gravity,
    E. 8 times by weight or more of water absorption ratio, and
    F. 3 times or more of oil absorption ratio.

11. The granular protein material according to claim 10, wherein a lightness (L value) with the Hunter-Lab color system of the granular protein material is 75 to 100 when color of a pulverized product of the granular protein material is measured by a reflect light with a color difference meter.

12. The granular protein material according to claim 11, wherein a brownness (a value) with the Hunter-Lab color system of the granular protein material is -5 to 1.5 when color of a pulverized product of the granular protein material is measured by a reflect light with a color difference meter.

**13.** The granular protein material according to claim 12, wherein a yellowness (b value) with the Hunter-Lab color system of the granular protein material is 0 to 18 when color of a pulverized product of the granular protein material is measured by a reflect light with a color difference meter.

**14.** The granular protein material according to claim 10, wherein the granular protein material in a water-absorbed state has 10 to 100 gf of a maximum load value measured with a rheometer (plunger diameter 8 mm).

[Fig. 1]

| Soybean protein isolate | Test product 3 | Test product 4 |

(100x observation)

| Soybean protein isolate | Test product 3 | Test product 4 |

(300x observation)

## INTERNATIONAL SEARCH REPORT

| International application No. |
| --- |
| PCT/JP2018/040550 |

### A. CLASSIFICATION OF SUBJECT MATTER
Int.Cl. A23J3/14(2006.01)i, A23J3/16(2006.01)i

According to International Patent Classification (IPC) or to both national classification and IPC

### B. FIELDS SEARCHED

Minimum documentation searched (classification system followed by classification symbols)
Int.Cl. A23J3/00-3/34

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/MEDLINE/EMBASE/BIOSIS/FSTA/WPIDS (STN), JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| Y | JP 59-140841 A (KIKKOMAN CORPORATION) 13 August 1984 (claims, examples) (Family: none) | 1-14 |
| Y | JP 2003-79309 A (FUJI OIL CO., LTD.) 18 March 2003 (paragraphs [0022]-[0023]) & US 2004/0151817 A1 (paragraphs [0092]-[0093]) & WO 03/005827 A1 | 1-14 |
| Y | Product Catalog (product guide of FUJI OIL CO., LTD. ), 2016, p. 15 (tables) | 1-14 |
| A | WO 2011/004893 A1 (FUJI OIL CO., LTD.) 13 January 2011 (paragraph [0017]) (Family: none) | 1-14 |
| A | WO 2009/145198 A1 (FUJIWARA TECHNO-ART CO., LTD.) 03 December 2009 (claims, figures) & US 2011/0104006 A1 (claims, figures) & EP 2279674 A1 | 1-14 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 December 2018 (20.12.2018) | 08 January 2019 (08.01.2019) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

**EP 3 704 948 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007531530 A
- WO 200698399 A1
- WO 2014156948 A1
- JP S5423971 B
- WO 2009145198 A